# EUROPÄISCHE PATENTSCHRIFT

(11) **EP 2 976 512 B1**
(45) Veröffentlichungstag und Bekanntmachung des Hinweises auf die Patenterteilung: **05.09.2018**
(21) Anmeldenummer: 14706836.5
(22) Anmeldetag: 26.02.2014
(51) Int. Cl.: F01L 1/053, F02D 41/00, F02D 13/02, F01L 1/047, F01L 1/344

(54) **BRENNKRAFTMASCHINE UND VERFAHREN ZUM BETREIBEN EINER SOLCHEN BRENNKRAFTMASCHINE**
INTERNAL COMBUSTION ENGINE AND METHOD OF OPERATING THIS INTERNAL CONMBUSTION ENGINE
MOTEUR À COMBUSTION INTERNE ET PROCÉDÉ POUR LE FAIRE FONCTIONNER

(30) Priorität: 20.03.2013 DE 102013004800
(43) Veröffentlichungstag der Anmeldung: 27.01.2016
(73) Patentinhaber: Volkswagen Aktiengesellschaft, 38440 Wolfsburg (DE)
(72) Erfinder: GROENENDIJK, Axel, 38518 Gifhorn (DE)
(86) Internationale Anmeldenummer: PCT/EP2014/053762
(87) Internationale Veröffentlichungsnummer: WO 2014/146878

(56) Entgegenhaltungen:
- EP-A2- 1 054 143
- EP-A2- 2 048 331
- WO-A2-2012/058280
- AT-U1- 5 783
- DE-A1-102005 032 791
- DE-A1-102011 014 239
- DE-A1-102011 106 394
- US-A1- 2003 164 163
- US-A1- 2008 060 625

## Beschreibung

Die Erfindung betrifft ein Verfahren zum Betreiben einer Brennkraftmaschine.

Es ist bekannt, Brennkraftmaschinen, wie sie beispielsweise für den Antrieb von Kraftfahrzeugen genutzt werden, mit einer Aufladung durch beispielsweise Abgasturbolader auszustatten. Durch die Aufladung wird der Druck des einem Verbrennungsmotor der Brennkraftmaschine zugeführten Frischgases erhöht, wodurch sich die Füllung der Brennräume, damit die Menge des pro Arbeitstakt umsetzbaren Kraftstoffs und folglich die Leistung der Brennkraftmaschine erhöht. Zusätzlich kann durch eine Aufladung der Wirkungsgrad insbesondere einer Diesel-Brennkraftmaschine erhöht werden.

Weiterhin ist es bekannt, einen Teil des Abgases in den Frischgasstrang zurück zu führen, wo dieses mit dem Frischgas wieder in die Brennräume des Verbrennungsmotors eingebracht wird. Dadurch können die bei der Verbrennung in den Brennräumen auftretenden Spitzentemperaturen gesenkt werden. Dies führt zu einer Verringerung von Stickoxiden (NOₓ) in dem Abgas. Neben einer "externen" Abgasrückführung (AGR), die hauptsächlich bei DieselBrennkraftmaschinen eingesetzt wird, ist von Otto-Brennkraftmaschinen auch die Umsetzung einer "internen" AGR bekannt (vgl. DE 10 2005 053 940 A1), bei der ein Zurückführen von Abgas in die Brennräume des Verbrennungsmotors durch Beeinflussung der Ventilsteuerzeiten mittels eines variablen Ventiltrieb zur Erzielung einer Ventilüberschneidung realisiert wird. Vorteile der internen AGR gegenüber der externen AGR können sich aus den kurzen Wegen und den schnellen Reaktionszeiten sowie der direkten Dosierbarkeit ergeben. Nachteilig kann sich allerdings das Fehlen der Möglichkeit einer wirksamen Abkühlung des rückgeführten Abgases, wie dies bei einer externen AGR möglich ist, erweisen.

Der Ventiltrieb für eine Kolben-Brennkraftmaschine umfasst jeweils mindestens ein, regelmäßig zwei Einlass- und Auslassventile für jeden Zylinder der Brennkraftmaschine. Diese Einlass- und Auslassventile werden zumeist über Nockenwellen gesteuert, wobei bei Brennkraftmaschinen mit mehr als zwei Ventilen pro Zylinder regelmäßig zwei Nockenwellen zum Einsatz kommen. Vielfach ist die Anordnung dieser Nockenwellen derart, dass eine davon sämtliche Einlassventile und die andere sämtliche Auslassventile steuert.

Es ist bekannt, zur Verbesserung des Betriebsverhaltens einer Brennkraftmaschine die Ventilsteuerzeiten der einzelnen Einlass- und/oder Auslassventile dadurch zu verändern, dass die Phasenwinkel der diese steuernden Nockenwellen verstellt werden. Hierzu wird die jeweilige Nockenwelle mittels eines Phasenstellers gegenüber einem Antriebsrad, über das diese rotierend angetrieben wird, um einen definierten Winkel, den Phasenwinkel, verdreht, wodurch die Ventilsteuerzeiten der damit angesteuerten Ventile in Richtung "früh" oder "spät" verstellt werden.

Bekannt sind weiterhin Brennkraftmaschinen, bei denen die Nockenwellen jeweils sowohl Einlass- als auch Auslassventile steuern. Diese werden vielfach als "gemischte" Nockenwellen bezeichnet. Prinzipiell führt eine Phasenverstellung einer solchen (einfachen) gemischten Nockenwellen zu einer gleichzeitigen Änderung der Ventilsteuerzeiten von sowohl den Einlassals auch Auslassventilen und zwar in derselben Richtung und mit demselben Phasenwinkel. Dies ist in vielen Fällen jedoch nicht gewünscht. Vielmehr sollten die Ventilsteuerzeiten der Einlass- und Auslassventile unabhängig steuerbar sein. Dies wird für gemischte Nockenwellen dadurch erreicht, dass diese in Form von doppelten Nockenwellen ausgebildet sind. Diese können aus einer Außenwelle und einer innerhalb der Außenwelle gelagerten Innenwelle bestehen, wobei sowohl die Innen- als auch die Außenwelle mit Nocken für die Steuerung der Einlass- und Auslassventile versehen sind. Die Nocken der Innenwelle ragen dabei durch Öffnungen in der Außenwelle. Mittels eines Phasenstellers, der die Innen- und die Außenwelle unabhängig voneinander verdrehen kann, besteht dann die Möglichkeit, die Steuerzeiten der Einlass- und Auslassventile unabhängig voneinander zu verstellen. Ein solcher Phasensteller ist beispielsweise aus der US 7,841,311 B2 bekannt.

Aus der DE 199 08 286 A1 ist weiterhin ein Ventiltrieb bekannt, bei dem ein rohrförmiger Nockenträger drehfest und axial verschiebbar auf einer Grundwelle angeordnet ist. Der Nockenträger bildet axial versetzt zwei Nocken mit unterschiedlichen Nockenlaufbahnen aus. Durch das axiale Verschieben des Nockenträger auf der Grundwelle kann ein Gaswechselventil durch die unterschiedlich geformten Nockenlaufbahnen in unterschiedlicher Weise betätigt werden.

Weiterhin ist aus der US 2009/0194080 A1 bekannt, bei einer Diesel-Brennkraftmaschine ein sogenanntes "Scavenging" umzusetzen, bei dem durch eine Überschneidung der Öffnungszeiten der Einlass- und Auslassventile der einzelnen Zylinder in Zeiten eines Überdrucks in dem Frischgasstrang im Vergleich zu dem Druck im Abgasstrang Abgas, das in den Zylindern verblieben ist, und gegebenenfalls etwas Frischgas in den Abgasstrang abzuführen. Bei der Brennkraftmaschine gemäß der US 2009/0194080 A1 erfolgt dies durch schaltbare Zusatznocken für die Einlassventile, die bei einem Betrieb der Brennkraftmaschine in einem dafür vorgesehenen Betriebsbereich (niedrige Drehzahlen mit mittleren bis hohen Lasten), aktiviert werden und ein zusätzliches Öffnen der Einlassventile während des Auslasstakts und somit in Überschneidung mit einem Öffnen der Auslassventile bewirken. Durch das Scavenging kann insbesondere das Ansprechen eines Abgasturboladers bei niedrigen Lasten und/oder Drehzahlen verbessert werden.

Aus der US 2011/0174249 A1 ist zudem bekannt, basierend auf dem aus der US 2009/0194080 A1 bekannten System, die Öffnungszeiten der Einlassventile während des Einlasstakts so zu verändern, dass diese entweder vor oder nach dem unteren Totpunkt des Kolbens ihre Schließstellung erreichen. Dadurch soll eine Absenkung des Abgasdrucks erreicht werden, wodurch das Druckgefälle zwischen dem Frischgasstrang und dem Abgasstrang, das für das Scavenging erforderlich ist, vergrößert werden.

Die EP 2 048 331 A2 offenbart eine Brennkraftmaschine mit einem variablen Ventiltrieb, der ermöglicht, die Brennkraftmaschine sowohl gemäß einem Miller-Zyklus als auch mit einer internen Abgasrückführung zu betreiben. Ein Miller-Zyklus wird bedarfsweise durch ein Schließen zumindest eines Auslassventils je Zylinder nach einem sich an einen Ansaugtakt anschließenden unteren Totpunkt realisiert, während eine interne Abgasrückführung durch eine so genannte "Bootphase" realisiert wird, bei der der Beginn des Hubverlaufs eines Einlassventils durch eine "Boot-Rampe" gekennzeichnet ist, die durch eine entsprechende Verstellung der Steuerzeiten für dieses Einlassventil zu einer relevanten Öffnung bereits während des Ausstoßtakts führen kann.

Und schließlich ist aus der DE 10 2005 015 852 A1 bekannt, den Kaltlauf einer Hubkolbenbrennkraftmaschine zu verbessern, indem in diesem Zustand eine interne AGR realisiert wird. Hierzu wird mittels eines Schaltnockens für zumindest ein Auslassventil jedes Zylinders ein zusätzliches Öffnen des Auslassventils während einer Einlassphase verwirklicht.

Ausgehend von diesem Stand der Technik lag der Erfindung die Aufgabe zugrunde, bei einer Brennkraftmaschine, insbesondere Diesel-Brennkraftmaschine, die für sich separat bekannten Maßnahmen des Scavenging und der internen AGR auf einfache Weise kombiniert umzusetzen.

Diese Aufgabe wird durch ein Verfahren zum Betrieb einer Brennkraftmaschine gemäß dem unabhängigen Patentanspruch 1 gelöst. Vorteilhafte Ausgestaltungen des erfindungsgemäßen Verfahrens zum Betrieb einer Brennkraftmaschine sind Gegenstand der abhängigen Patentansprüche und ergeben sich aus der nachfolgenden Beschreibung der Erfindung.

Eine gattungsgemäße Brennkraftmaschine für die Durchführung des erfindungsgemäßen Verfahrens mit (mindestens) einem Vierzylinder-Viertakt-Verbrennungsmotor, (mindestens) einem mit allen vier Zylindern des Verbrennungsmotors verbundenen Frischgasstrang und (mindestens) einem mit allen vier Zylindern des Verbrennungsmotors verbundenen Abgasstrang (sowie vorzugsweise (mindestens) einem in den Frischgasstrang integrierten Verdichter), wobei je Zylinder des Verbrennungsmotors die Zufuhr von Frischgas (aus dem Frischgasstrang) mittels zweier Einlassventile gesteuert wird und die Abfuhr von Abgas (in den Abgasstrang) mittels zweier Auslassventile gesteuert wird, wobei Auslassbetätigungsmittel vorgesehen sind, die während eines Ausstoßtakts die Auslassventile öffnen, und wobei Einlassbetätigungsmittel vorgesehen sind, die mindestens eines der Einlassventile während eines Ansaugtakts des Verbrennungsmotors und betriebszustandsabhängig auch während des Ausstoßtakts öffnen, ist erfindungsgemäß durch Phasenverschiebungsmittel gekennzeichnet, durch die eine Phasenverschiebung des Öffnens des Auslassventils durch die Auslassbetätigungsmittel erfolgen kann.

Erfindungsgemäß sind die Phasenverschiebungsmittel derart ausgebildet, dass das Öffnen des mindestens einen Einlassventils während des Ausstoßtakts in einer Phase eines Überdrucks im Abgasstrang im Vergleich zu dem Druck im Frischgasstrang erfolgen kann, um eine interne Abgasrückführung zu erzielen. Weiterhin sind die Phasenverschiebungsmittel derart ausgebildet, dass das Öffnen von dem mindestens einen Einlassventil während des Ausstoßtakts auch in einer Phase des Überdrucks im Frischgasstrang im Vergleich zu dem Druck im Abgasstrang erfolgen kann, um Scavenging zu erzielen.

Zur Erzielung von Scavenging wird das Öffnen des mindestens einen Einlassventils während des Ausstoßtakts dann durchgeführt, wenn eine Phase eines Überdrucks im Frischgasstrang im Vergleich zu dem Druck im Abgasstrang gegeben ist. Zur Erzielung einer internen Abgasrückführung wird für den Zylinder das Öffnen der Auslassventile soweit nach früh verstellt, dass sich eine Phase eines Überdrucks im Abgasstrang im Vergleich zu dem Druck im Frischgasstrang mit dem Öffnen des Einlassventils während des Ausstoßtakts überschneidet.

Eine solche Ausgestaltung einer Brennkraftmaschine ermöglicht die Durchführung eines erfindungsgemäßen Verfahrens, bei dem zur Erzielung einer internen Abgasrückführung für den Zylinder das Öffnen des Auslassventils dieses Zylinders so weit nach früh verstellt wird, dass sich eine Phase eines Überdrucks im Abgasstrang im Vergleich zu dem Druck im Frischgasstrang mit dem Öffnen des Einlassventils dieses Zylinders während des Ausstoßtakts überschneidet. Dabei kann die Brennkraftmaschine und insbesondere die Phasenverschiebungsmittel mittels einer Steuerungsvorrichtung (Motorsteuerung) derart automatisch angesteuert werden, dass diese das erfindungsgemäße Verfahren durchführt.

Die erfindungsgemäße Ausgestaltung einer Brennkraftmaschine ermöglicht eine konstruktiv sowie regelungstechnisch einfache Integration der innermotorischen Maßnahmen des Scavenging sowie der internen AGR, wobei konstruktiv lediglich Maßnahmen getroffen werden müssen, die die Durchführung des sogenannten "2. Events" für die Einlassventile (deren Öffnen während des Ausstoßtakts) sowie eine Phasenverschiebung für die Auslassventile ermöglichen.

Sofern die Maßnahmen zur Erzeugung des 2. Events und/oder der Phasenverschiebung in mehreren Stufen oder stufenlos einstellbar sind, besteht durch die erfindungsgemäße Ausgestaltung einer Brennkraftmaschine weiterhin die Möglichkeit einer Regelung der Menge des beim Scavenging aus dem Zylinder abgeführten Restgases und/oder des bei der internen AGR in dem Zylinder zurückgehaltenen Restgases oder aus dem Abgasstrang in diesen zurückgeführten Abgases.

Sowohl ein Scavenging als auch eine interne AGR sind regelmäßig nur in bestimmten Betriebsbereichen (im Betriebskennfeld) des Verbrennungsmotors sinnvoll, während beide Maßnahmen in anderen Betriebsbereichen des Verbrennungsmotors nicht zur Anwendung kommen sollen. Dementsprechend ist bei der erfindungsgemäßen Brennkraftmaschine vorgesehen, dass diese Schaltmittel zur Aktivierung/Deaktivierung des 2. Events, d.h. des Öffnens des Einlassventils während des Ausstoßtakts, umfasst. Bei deaktiviertem 2. Event wird sowohl ein Scavenging als auch eine interne AGR (weitgehend) unterbunden. Die für zumindest die Auslassventile vorgesehene Möglichkeit einer Phasenverschiebung der Ventilsteuerzeiten kann dann in bekannter Weise für andere innermotorische Maßnahmen eingesetzt werden.

Erfindungsgemäß sind die Auslassbetätigungsmittel und die Einlassbetätigungsmittel in Form von einer oder mehreren Nockenwellen ausgebildet. Alternativ können z.B. aber auch individuelle Aktoren (insbesondere elektromagnetischer Bauart) zur Betätigung der Einlass- und/oder Auslassventile eingesetzt werden.

Zur Erzielung des 2. Events für den oder die Zylinder des Verbrennungsmotors kann bei einer Betätigung der Einlassventile mittels einer oder mehrerer Nockenwellen vorgesehen sein, dass die Schaltmittel einen oder mehrere Zusatznocken der Nockenwelle(n) aktivieren oder deaktivieren. Beispielswiese kann/können die Nockenwelle(n) Nockenhülsen aufweisen, die auf einer Grundwelle längsaxial verschiebbar sind, und mindestens zwei längsaxial versetzte Einlassnocken aufweisen, von denen zumindest einer einen Zusatznocken für die Erzeugung des zweiten Events aufweist und mindestens ein zweiter diesen Zusatznocken nicht aufweist. Mittels einer Schaltvorrichtung können die Nockenhülsen je nach Betriebszustand des Verbrennungsmotors so verschoben werden, dass die eine oder die andere Einlassnocke der Nockenhülsen mit dem dazugehörigen Einlassventil zusammenwirkt.

Die erfindungsgemäße Ausgestaltung einer Brennkraftmaschine ist auch dann einfach umsetzbar, wenn eine Kurbelwelle des Verbrennungsmotors eine erste Nockenwelle rotierend antreibt und die erste Nockenwelle eine zweite Nockenwelle rotierend antreibt. Bei einem solchen, sogenannten Koppelbetrieb von (mindestens) zwei Nockenwellen sind grundsätzlich die Möglichkeiten einer voneinander unabhängigen Verstellung der beiden Nockenwellen eingeschränkt oder nur unter erhöhtem konstruktivem und/oder regelungstechnischem Aufwand umsetzbar.

Vorteilhaft kann bei einem Koppelbetrieb der Nockenwellen vorgesehen sein, dass die Schaltmittel der ersten Nockenwelle und die Phasenverschiebungsmittel der zweiten Nockenwelle zugeordnet sind.

Die erfindungsgemäße Ausgestaltung einer Brennkraftmaschine ist weiterhin auch dann einfach umsetzbar, wenn die Nockenwellen als sogenannte gemischte Nockenwellen jeweils sowohl mindestens ein Einlassventil als auch mindestens ein Auslassventil betätigen. Grundsätzlich macht auch die Verwendung von gemischten Nockenwelle die Umsetzung unterschiedlicher Variabilitäten für die Einlass- und die Auslassventile komplexer.

Vorzugsweise können die Phasenverschiebungsmittel als Phasensteller ausgebildet sein, durch die die Rotation der Nockenwelle(n) gegenüber der Rotation der Kurbelwelle des Verbrennungsmotors (die die Rotation der Nockenwelle(n) direkt oder indirekt bewirkt) phasenverschoben wird. Bei der Verwendung einer oder mehrerer gemischter Nockenwelle kann dann weiterhin bevorzugt vorgesehen sein, dass der oder die Phasensteller als doppelte Phasensteller ausgebildet sind, die eine unabhängige Phasenverstellung des die Einlassnocken tragenden Teils einerseits und des die Auslassnocken tragenden Teils der gemischten Nockenwelle(n) andererseits ermöglichen. Alternativ können die Phasenverschiebungsmittel auch als schaltbare Nockenhülsen ausgebildet sein, die mehrere längsaxial versetzte Auslassnocken mit unterschiedlichen Steuerzeiten aufweisen.

Die Erfindung wird nachfolgend anhand eines in den Zeichnungen dargestellten Ausführungsbeispiels näher erläutert. In den Zeichnungen zeigt:
- Fig. 1:: in zwei Diagrammen den Verlauf der Ventilhübe von Einlass- und Auslassventil für einen Zylinder sowie den Druckverlauf im Frischgas- und Abgasstrang einer erfindungsgemäßen Brennkraftmaschine ohne Verwirklichung eines 2. Events für das Einlassventil;
- Fig. 2:: in zwei Diagrammen den Verlauf der Ventilhübe sowie den Druckverlauf gemäß Fig. 1 bei der Verwirklichung von Scavenging;
- Fig. 3:: in zwei Diagrammen den Verlauf der Ventilhübe sowie den Druckverlauf gemäß den Fig. 1 und 2 bei der Verwirklichung einer internen AGR; und
- Fig. 4:: Teile eines Ventiltrieb der Brennkraftmaschine gemäß den Fig. 1 bis 3.

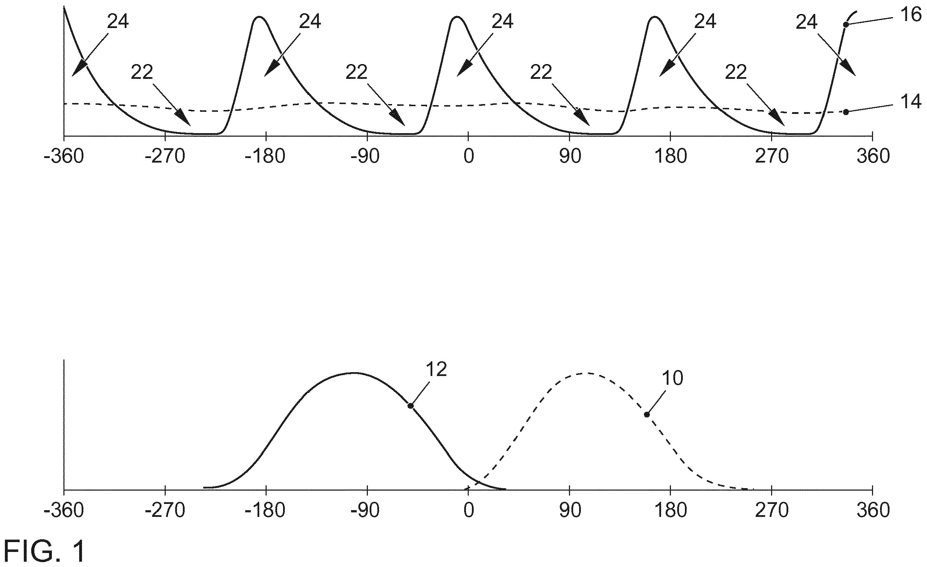

Die Fig. 1 bis 3 zeigen jeweils in dem unteren Diagramm den Verlauf der Ventilhübe der Einlassventile (gestrichelte Linien 10) sowie der Auslassventile (durchgezogene Linien 12) eines Zylinders eines nach dem Diesel-Prinzip arbeitenden Vierzylinder-Viertakt-Verbrennungsmotors mit jeweils zwei Einlass- und zwei Auslassventilen je Zylinder einer erfindungsgemäßen Brennkraftmaschine über dem Verlauf von zwei Umdrehungen (-360° bis +360°) einer Kurbelwelle des Verbrennungsmotors (entspricht einer Umdrehung des/der die Einlass- und Auslassventile antreibenden Nockenwelle(n) 26, 28).

In dem jeweils oberen Diagramm ist (schematisch) der Verlauf des (Absolut-)Drucks in einem motornahen Abschnitt (z.B. dem Saugrohr) eines mit allen vier Zylindern des Verbrennungsmotors verbundenen Frischgasstrangs (gestrichelte Linie 14) sowie in einem motornahen Abschnitts eines mit allen vier Zylindern des Verbrennungsmotors verbundenen Abgasstrangs (durchgezogene Linie 16), wiederum über dem Verlauf von zwei Umdrehungen der Kurbelwelle, dargestellt.

In der Fig. 1 ist ein Betrieb der Brennkraftmaschine ohne Verwirklichung eines 2. Events dargestellt, d.h. die Einlassventile der Zylinder werden lediglich einmal innerhalb des Ansaugtakts des jeweiligen Zylinders geöffnet. Der sich einstellende Druckverlauf im Frischgasstrang ist vergleichsweise konstant, während derjenige im Abgasstrang vergleichsweise stark schwankt, wobei der Druck im Abgasstrang phasenweise unterhalb (Unterdruckbereich 22) und phasenweise oberhalb (Überdruckbereich 24) des Drucks im Frischgasstrang liegt. Dabei kommen auf zwei Umdrehungen der Kurbelwelle infolge der insgesamt vier mit dem Frischgas- und dem Abgasstrang verbundenen Zylinder vier Überdruckbereiche 22 und vier Unterdruckbereiche 24. Der in der Fig. 1 dargestellte Betrieb des Verbrennungsmotors ohne 2. Event ist insbesondere in Betriebsbereichen vorgesehen, die durch mittlere bis hohe Drehzahlen gekennzeichnet sind.

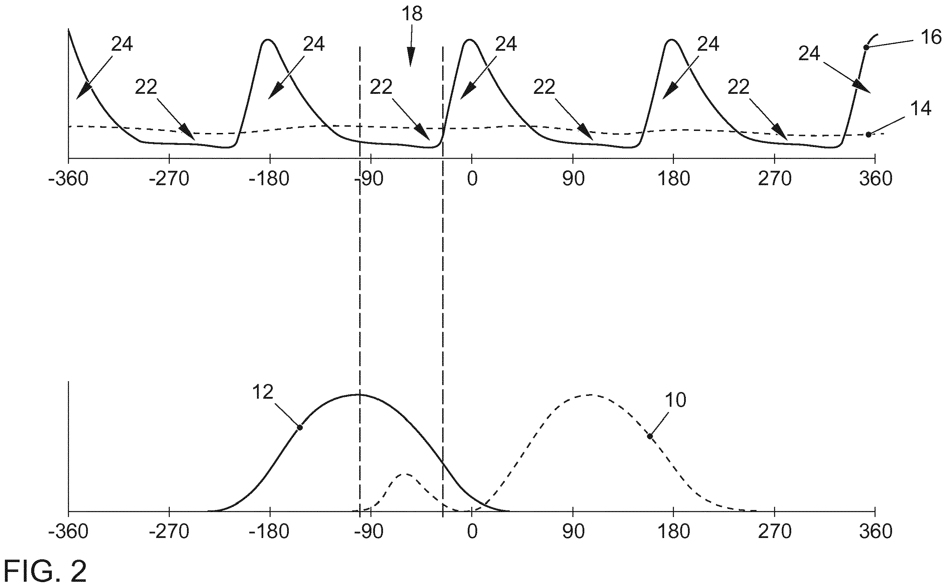

Liegt der Druck im Abgasstrang unterhalb des Drucks im Frischgasstrang besteht ein Druckgefälle vom Frischgasstrang zum Abgasstrang, das bei gleichzeitig geöffnetem Einlass- und Auslassventil (eines Zylinders) ein Scavenging bewirkt beziehungsweise unterstützen kann. Dies wird bei einem Betrieb der Brennkraftmaschine gemäß der Fig. 2 realisiert, indem ein sogenanntes zweites Event für eines (oder beider) der in den Diagrammen hinsichtlich ihres Ventilhubs dargestellten Einlassventile erzeugt wird. Dazu wird dieses Einlassventil zusätzlich während des Ausstoßtakts des in dem betrachteten Zylinder periodisch bewegten Kolbens und somit zeitgleich mit den Auslassventilen dieses Zylinders geöffnet. Dabei erfolgt das 2. Event in einer Phase, in der ein Druckgefälle vom Frischgasstrang zum Abgasstrang herrscht (vgl. in der Fig. 2 markierter Bereich 18) Dieses Druckgefälle unterstützt ein Ausspülen von im Zylinder befindlichem Restgas in den Abgasstrang. Teilweise kann auch Frischgas aus dem Frischgasstrang über den Zylinder in den Abgasstrang überströmen, ohne an den Prozessen in den nachfolgenden Takten des Zylinders teilzunehmen. Um dabei ein Eintreten von unverbranntem Kraftstoff in den Abgasstrang zu vermeiden, sollte ein solches Überströmen von Frischgas nur bei direkt einspritzenden Verbrennungsmotoren erfolgen. Ein Scavenging kann insbesondere in einem Betriebsbereich des Verbrennungsmotors vorgesehen sein, der durch niedrige Drehzahlen und mittlere bis hohe Lasten gekennzeichnet ist.

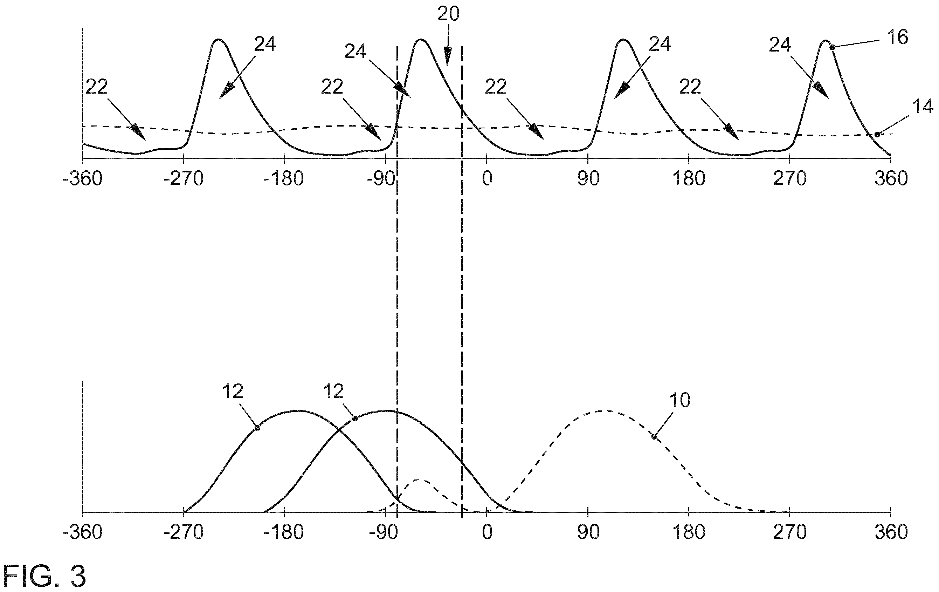

Liegt der Druck im Abgasstrang oberhalb des Drucks im Frischgasstrang besteht ein Druckgefälle vom Abgasstrang zum Frischgasstrang, das bei gleichzeitig geöffneten Einlass- und Auslassventilen (eines Zylinders) eine interne Abgasrückführung ermöglichen beziehungsweise unterstützen kann. Dies wird bei einem Betrieb der Brennkraftmaschine gemäß der Fig. 3 realisiert. Auch bei diesem Betrieb der Brennkraftmaschine ist das 2. Event verwirklicht, um ein zeitgleiches Öffnen von Einlass- und des Auslassventilen zu erreichen. Dabei unterscheidet sich das 2. Event hinsichtlich der Ventilöffnung des Einlassventils nicht von dem 2. Event bei dem Betrieb gemäß der Fig. 2 (Scavenging). Weiterhin sind die Steuerzeiten eines Auslassventils (während die Steuerzeiten des zweiten Auslassventils des betrachteten Zylinders unverändert bleiben) mittels eines Phasenstellers 34 weit (z.B. ca. 30°) nach früh verstellt, wodurch das 2. Event für das Einlassventil in einen Überdruckbereich 24 fällt. Demnach besteht dann ein Druckgefälle vom Abgasstrang zum Frischgasstrang (vgl. in der Fig. 3 markierter Bereich 20).

Sofern der Phasensteller 34 ein Verstellen der Steuerzeiten des Auslassventils in mehr als zwei Stufen oder sogar stufenlos ermöglicht, ist auch eine (ggf. stufenlose) Einstellung von sowohl dem Scavenging als auch der internen AGR möglich. Erfolgt nämlich eine Phasenverstellung der Öffnungszeiten des Auslassventils in einem geringeren Maße als dies in der Fig. 3 dargestellt ist, fällt das 2. Event sowohl teilweise in einen Unterdruckbereich 22 als auch in einen Überdruckbereich 24. Je nach Verteilung des 2. Events auf den Unterdruckbereich 22 und den Überdruckbereich 24 ergibt sich dann insgesamt entweder ein Scavenging oder eine interne AGR mit gegenüber den in den Fig. 2 und 3 reduzierten (gespülten oder rückgeführten bzw. zurückgehaltenen) Gasmengen.

Selbstverständlich besteht auch die Möglichkeit, das 2. Event variabel bezüglich der Ventilsteuerzeiten des 2. Events zu erzeugen, um dadurch (ggf. zusätzlich) eine Einstellbarkeit des Scavenging und/oder der internen AGR zu erreichen.

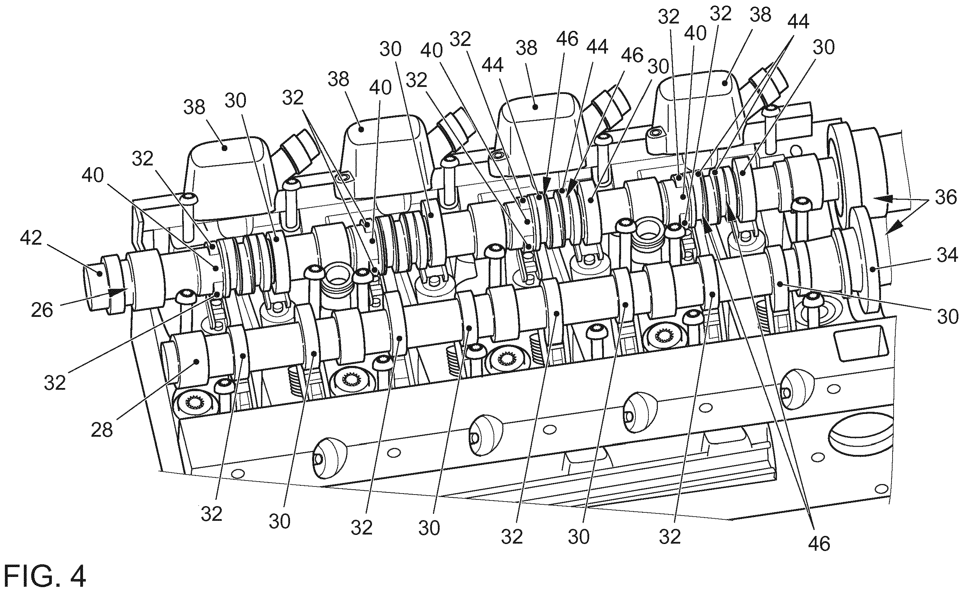

Die Fig. 4 zeigt Teile eines Ventiltriebs einer erfindungsgemäßen Brennkraftmaschine, deren Betrieb in den Fig. 1 bis 3 veranschaulicht ist.

Der Ventiltrieb umfasst zwei Nockenwellen 26, 28, die im sogenannten Koppelbetrieb rotierend angetrieben werden. Dazu wird eine erste Nockenwelle 26 von einer nicht dargestellten Kurbelwelle des Verbrennungsmotors mit zu der Drehzahl der Kurbelwelle halber Drehzahl rotierend angetrieben. Die erste Nockenwelle treibt über ein Zahnradgetriebe 36 eine zweite Nockenwelle 28 mit gleicher Drehzahl aber entgegengesetztem Drehsinn an.

Beide Nockenwellen 26, 28 sind als sogenannte gemischte Nockenwellen ausgebildet. Diese sind somit dadurch gekennzeichnet, dass diese jeweils (mindestens) ein Einlass- und ein Auslassventil für jeden der vier Zylinder des Verbrennungsmotors ansteuern bzw. betätigen. Somit weist jede der Nockenwellen 26, 28 vier Auslassnocken 30 sowie mindestens vier Einlassnocken 32 auf, die über Rollenschlepphebel die jeweiligen Gaswechselventile betätigen.

Die zweite Nockenwelle 28 ist mit einem doppelt wirkenden Phasensteller 34 versehen, der es ermöglicht die Steuerzeiten der von dieser betätigten Einlass- und Auslassventile unabhängig voneinander zu verändern. Dies wird durch eine Doppelwellenkonstruktion erreicht, wozu die zweite Nockenwelle 28 eine als Hohlwelle ausgebildete Außenwelle und eine innerhalb von dieser angeordnete Innenwelle umfasst. Dabei ist die Innenwelle mit den Einlassnocken 32 versehen, die jeweils in einer länglichen, in Umfangsrichtung ausgerichteten Öffnung der Außenwelle geführt sind, um eine Relativverdrehung der Außen- zur Innenwelle zu ermöglichen. Die Außenwelle trägt die Auslassnocken 30. Mittels des doppelt wirkenden Phasenstellers können die Innenwelle und die Außenwelle unabhängig voneinander um einen definierten Winkelbereich gegenüber der durch die Koppelung über das Zahnradgetriebe 36 festgelegten (rotatorischen) Relativposition der beiden Nockenwellen zueinander verstellt werden. Details zum Aufbau und zur Funktionsweise der in Doppelwellenkonstruktion ausgeführten zweiten Nockenwelle 28 sowie zu dem doppelt wirkenden Phasensteller 34 können der US 7,841,311 B2 entnommen werden.

Demnach kann der doppelt wirkende Phasensteller 34 ein Antriebsrad als Teil des Zahnradgetriebes 36 aufweisen. Die Rotation des Antriebsrads wird über zwei Flügelräder auf die zweite Nockenwelle übertragen, wobei eines der Flügelräder auf die Innenwelle und das andere Flügelrad auf die Außenwelle der zweiten Nockenwelle wirkt. Die Flügelräder sind in Grenzen innerhalb eines ebenfalls von dem Antriebsrad rotierend angetriebenen Gehäuses verdrehbar, wodurch eine Phasenverstellung der mit den Flügelrädern verbundenen Innenwelle und Außenwelle gegenüber dem Antriebsrad erreicht werden kann. Die Verstellung der beiden Flügelräder innerhalb des Gehäuses erfolgt hydraulisch und unabhängig voneinander, d.h. die Phasenstellung der einen Welle hat keinen Einfluss auf die Verstellbarkeit der anderen Welle.

Die erste Nockenwelle 26 ist nicht mit einem Phasensteller versehen, durch den die Steuerzeiten der Einlass- und Auslassventile phasenverschoben werden können. Der ersten Nockenwelle 26 sind jedoch Schaltmittel in Form von vier Schaltvorrichtungen 38 zugeordnet, die es ermöglichen, jedes der von der ersten Nockenwelle 38 betätigten Einlassventile wahlweise mit einem von zwei sich in ihrem Nockenverlauf unterscheidenden Einlassnocken 32 in Wirkverbindung zu bringen. Hierzu werden die beiden jeweiligen Einlassnocken 32 axial versetzt von einer Nockenhülse 40 ausgebildet, die drehfest aber axial verschiebbar auf einer Grundwelle 42 der ersten Nockenwelle 26 angeordnet sind. Ein Verschieben der Nockenhülsen 40, um jeweils die eine oder andere Einlassnocke 32 in Wirkverbindung mit dem dazugehörigen Rollenschlepphebel zu bringen, erfolgt mittels der Schaltvorrichtungen 38, die jeweils elektromechanisch eine von zwei Schaltstiften 44 ausfahren können, der dann in eine von zwei, entgegengesetzt spiralförmig umlaufende Schaltnuten 46 der dazugehörigen Nockenhülse 40 eingreift und in Verbindung mit der Rotation der ersten Nockenwelle 26 die Axialverschiebung dieser Nockenhülse 40 bewirkt. Details zum Aufbau und zur Funktionsweise der Schaltmittel für die erste Nockenwelle 26 können beispielsweise der DE 10 2011 014 308 A1 entnommen werden.

Jeweils einer der beiden Einlassnocken 32 jeder der Nockenhülsen 40 unterscheidet sich von dem anderen Einlassnocken 32 darin, dass eine zusätzliche Nockenerhebung (Zusatznocken) vorgesehen ist, durch die das anhand der Fig. 1 bis 3 beschriebene 2. Event ausgeführt wird.

In Verbindung mit der Variabilität der Steuerzeiten der mittels der zweiten Nockenwelle 28 betätigten Auslassventile können die anhand der Fig. 1 bis 3 beschriebenen Betriebszustände für den Verbrennungsmotor realisiert werden.

### Bezugszeichenliste

- 10: Verlauf des Ventilhubs eines Einlassventils
- 12: Verlauf des Ventilhubs eines Auslassventils
- 14: Verlauf des Drucks im Frischgasstrang
- 16: Verlauf des Drucks im Abgasstrang
- 18: Bereich einer Überschneidung von 2. Event und Unterdruckbereich
- 20: Bereich einer Überschneidung von 2. Event und Überdruckbereich
- 22: Unterdruckbereich
- 24: Überdruckbereich
- 26: erste Nockenwelle
- 28: zweite Nockenwelle
- 30: Auslassnocken
- 32: Einlassnocken
- 34: Phasensteller
- 36: Zahnradgetriebe
- 38: Schaltvorrichtung
- 40: Nockenhülse
- 42: Grundwelle
- 44: Schaltstifte
- 46: Schaltnut

## Patentansprüche

1. Verfahren zum Betrieb einer Brennkraftmaschine mit einem Vierzylinder-Viertakt-Verbrennungsmotor, einem mit allen vier Zylindern des Verbrennungsmotors verbundenen Frischgasstrang und einem mit allen vier Zylindern des Verbrennungsmotors verbundenen Abgasstrang, wobei je Zylinder des Verbrennungsmotors die Zufuhr von Frischgas mittels zweier Einlassventile gesteuert wird und die Abfuhr von Abgas mittels zweier Auslassventile gesteuert wird, wobei Auslassbetätigungsmittel in Form von einer oder mehrerer Nockenwellen (28) vorgesehen sind, die die Auslassventile öffnen, und wobei Einlassbetätigungsmittel in Form von einer oder mehrerer Nockenwellen (26) vorgesehen sind, die mindestens eines der Einlassventile während eines Ansaugtakts und während des Ausstoßtakts öffnen, wobei Phasenverschiebungsmittel zur Phasenverschiebung des Öffnens der Auslassventile oder von mindestens einem der Auslassventile durch die Auslassbetätigungsmittel und Schaltmittel zur Aktivierung/Deaktivierung des Öffnens von mindestens einem der Einlassventile während des Ausstoßtakts vorgesehen sind, wobei die Phasenverschiebungsmittel derart ausgebildet sind, dass das Öffnen des mindestens einen Einlassventils während des Ausstoßtakts in einer Phase eines Überdrucks im Abgasstrang im Vergleich zu dem Druck im Frischgasstrang erfolgen kann, um eine interne Abgasrückführung zu erzielen, wobei die Phasenverschiebungsmittel weiterhin derart ausgebildet sind, dass das Öffnen von dem mindestens einen Einlassventil während des Ausstoßtakts auch in einer Phase des Überdrucks im Frischgasstrang im Vergleich zu dem Druck im Abgasstrang erfolgen kann, um Scavenging zu erzielen, **dadurch gekennzeichnet, dass**
- zur Erzielung von Scavenging das Öffnen des mindestens einen Einlassventils während des Ausstoßtakts dann durchgeführt wird, wenn eine Phase eines Überdrucks im Frischgasstrang im Vergleich zu dem Druck im Abgasstrang gegeben ist und
- zur Erzielung einer internen Abgasrückführung für den Zylinder das Öffnen der Auslassventile soweit nach früh verstellt wird, dass sich eine Phase eines Überdrucks im Abgasstrang im Vergleich zu dem Druck im Frischgasstrang mit dem Öffnen des Einlassventils während des Ausstoßtakts überschneidet.

2. Verfahren zum Betrieb einer Brennkraftmaschine gemäß Anspruch 1, **dadurch gekennzeichnet, dass** die Schaltmittel einen Zusatznocken der Nockenwelle(n) (26, 28) aktivieren oder deaktivieren.

3. Verfahren zum Betrieb einer Brennkraftmaschine gemäß Anspruch 1 oder 2, **dadurch gekennzeichnet, dass** eine Kurbelwelle des Verbrennungsmotors eine erste Nockenwelle (26) rotierend antreibt und die erste Nockenwelle (26) eine zweite Nockenwelle (28) rotierend antreibt.

4. Verfahren zum Betrieb einer Brennkraftmaschine gemäß Anspruch 3, **dadurch gekennzeichnet, dass** die Schaltmittel der ersten Nockenwelle (26) und die Phasenverschiebungsmittel der zweiten Nockenwelle (28) zugeordnet sind.

5. Verfahren zum Betrieb einer Brennkraftmaschine gemäß einem der Ansprüche 1 bis 4, **dadurch gekennzeichnet, dass** die Nockenwellen (26, 28) als gemischte Nockenwellen sowohl mindestens ein Einlassventil als auch mindestens ein Auslassventil betätigen.

6. Verfahren zum Betrieb einer Brennkraftmaschine gemäß einem der Ansprüche 1 bis 5, **dadurch gekennzeichnet, dass** die Phasenverschiebungsmittel als Phasensteller (34) ausgebildet sind.

## Claims

1. Method for operating an internal combustion engine having a four-cylinder, four-stroke combustion engine, having a fresh-gas tract connected to all four cylinders of the combustion motor, and having an exhaust-gas tract connected to all four cylinders of the combustion motor, wherein, for each cylinder of the combustion motor, the supply of fresh gas is controlled by means of two inlet valves and the discharge of exhaust gas is controlled by means of two outlet valves, wherein outlet actuating means in the form of one or more camshafts (28) are provided, which open the outlet valves, and wherein inlet actuating means in the form of one or more camshafts (26) are provided, which open at least one of the inlet valves during an intake stroke and during the exhaust stroke, wherein phase shift means for the phase shift of the opening of the outlet valves or of at least one of the outlet valves by the outlet actuating means, and switching means for the activation/deactivation of the opening of at least one of the inlet valves during the exhaust stroke, are provided, wherein the phase shift means are designed such that the opening of the at least one inlet valve during the exhaust stroke can take place in a phase of a positive pressure in the exhaust-gas tract in relation to the pressure in the fresh-gas tract, in order to realize internal exhaust-gas recirculation, wherein the phase shift means are furthermore designed such that the opening of the at least one inlet valve during the exhaust stroke can also take place in a phase of the positive pressure in the fresh-gas tract in relation to the pressure in the exhaust-gas tract, in order to realize scavenging, **characterized in that**
- to realize scavenging, the opening of the at least one inlet valve during the exhaust stroke is performed when a phase of a positive pressure in the fresh-gas tract in relation to the pressure in the exhaust-gas tract is present, and
- to realize internal exhaust-gas recirculation for the cylinder, the opening of the outlet valves is advanced to such an extent that a phase of a positive pressure in the exhaust-gas tract in relation to the pressure in the fresh-gas tract overlaps the opening of the inlet valve during the exhaust stroke.

2. Method for operating an internal combustion engine according to Claim 1, **characterized in that** the switching means activate or deactivate an auxiliary cam of the camshaft(s) (26, 28).

3. Method for operating an internal combustion engine according to Claim 1 or 2, **characterized in that** a crankshaft of the combustion motor drives a first camshaft (26) in rotation, and the first camshaft (26) drives a second camshaft (28) in rotation.

4. Method for operating an internal combustion engine according to Claim 3, **characterized in that** the switching means are assigned to the first camshaft (26), and the phase shift means are assigned to the second camshaft (28).

5. Method for operating an internal combustion engine according to one of Claims 1 to 4, **characterized in that** the camshafts (26, 28), as mixed camshafts, actuate both at least one inlet valve and at least one outlet valve.

6. Method for operating an internal combustion engine according to one of Claims 1 to 5, **characterized in that** the phase shift means are formed as phase adjusters (34) .

## Revendications

1. Procédé pour faire fonctionner une machine motrice à combustion comprenant un moteur thermique à quatre cylindres et quatre temps, une ligne de gaz frais reliée à tous les quatre cylindres du moteur thermique et une ligne de gaz d'échappement reliée à tous les quatre cylindres du moteur thermique, pour chaque cylindre du moteur thermique, l'arrivée de gaz frais étant commandée au moyen de deux soupapes d'admission et l'évacuation des gaz d'échappement étant commandée au moyen de deux soupapes d'échappement, des moyens d'actionnement d'échappement sous la forme d'un ou plusieurs arbres à cames (28) étant présents, lesquels ouvrent les soupapes d'échappement, des moyens d'actionnement d'admission sous la forme d'un ou plusieurs arbres à cames (26) étant présents, lesquels ouvrent au moins l'une des soupapes d'admission pendant un cycle d'aspiration et pendant le cycle d'expulsion, des moyens de déphasage destinés à déphaser l'ouverture des soupapes d'échappement ou d'au moins l'une des soupapes d'échappement par les moyens d'actionnement d'échappement et des moyens de commutation destinés à activer/désactiver l'ouverture d'au moins l'une des soupapes d'admission pendant le cycle d'expulsion étant présents, les moyens de déphasage étant configurés de telle sorte que l'ouverture de l'au moins une soupape d'admission pendant le cycle d'expulsion peut avoir lieu dans une phase d'une surpression dans la ligne de gaz d'échappement en comparaison de la pression dans la ligne de gaz frais afin d'obtenir un retour des gaz d'échappement interne, les moyens de déphasage étant en outre configurés de telle sorte que l'ouverture de l'au moins une soupape d'admission pendant le cycle d'expulsion peut également avoir lieu dans une phase de la surpression dans la ligne de gaz frais par rapport à la pression dans la ligne de gaz d'échappement afin d'obtenir un effet de balayage,
**caractérisé en ce que**
- pour obtenir le balayage, l'ouverture de l'au moins une soupape d'admission pendant le cycle d'expulsion est effectuée en présence d'une phase d'une surpression dans la ligne de gaz frais par rapport à la pression dans la ligne de gaz d'échappement et
- pour obtenir le retour des gaz d'échappement interne pour le cylindre, l'ouverture des soupapes d'échappement est décalée dans le sens de l'avance jusqu'à ce qu'une phase d'une surpression dans la ligne de gaz d'échappement par rapport à la pression dans la ligne de gaz frais se superpose à l'ouverture de la soupape d'admission pendant le cycle d'expulsion.

2. Procédé pour faire fonctionner une machine motrice à combustion selon la revendication 1, **caractérisé en ce que** les moyens de commutation activent ou désactivent une came supplémentaire du ou des arbres à cames (26, 28).

3. Procédé pour faire fonctionner une machine motrice à combustion selon la revendication 1 ou 2, **caractérisé en ce qu'**un vilebrequin du moteur thermique entraîne en rotation un premier arbre à cames (26) et le premier arbre à cames (26) entraîne en rotation un deuxième arbre à cames (28).

4. Procédé pour faire fonctionner une machine motrice à combustion selon la revendication 3, **caractérisé en ce que** les moyens de commutation sont associés au premier arbre à cames (26) et les moyens de déphasage au deuxième arbre à cames (28).

5. Procédé pour faire fonctionner une machine motrice à combustion selon l'une des revendications 1 à 4, **caractérisé en ce que** les arbres à cames (26, 28), en tant qu'arbres à cames mixtes, actionnent à la fois au moins une soupape d'admission ainsi qu'au moins une soupape d'échappement.

6. Procédé pour faire fonctionner une machine motrice à combustion selon l'une des revendications 1 à 5, **caractérisé en ce que** les moyens de déphasage sont réalisés sous la forme d'un déphaseur (34).
